# EUROPEAN PATENT SPECIFICATION

(11) **EP 1 681 546 B1**
(45) Date of publication and mention of the grant of the patent: **27.05.2009**
(21) Application number: 05078060.0
(22) Date of filing: 28.12.2005
(51) Int. Cl.: G01M 9/06, G01M 9/08

(54) **System for compensating aerodynamic measurements in a wind tunnel**
System zur Kompensation aerodynamischer Messungen in einem Windkanal
Système de compensation de mesures aérodynamiques dans une soufflerie

(30) Priority: 31.12.2004 ES 200500027
(43) Date of publication of application: 19.07.2006
(73) Proprietor: Airbus España, S.L., 28906 Getafe (Madrid) (ES)
(72) Inventor: Cabello Moreno, Alberto, 28045 Madrid (ES); Viviento Core, Angel, 28007Madrid (ES); Bayoumi, Adel Abbas, 28040 Madrid (ES)
(74) Representative: Ungria Lopez, Javier

(56) References cited:
- DE-C- 729 695
- US-A1- 2004 253 107

## Description

### TECHNICAL FIELD OF THE INVENTION

The present invention is encompassed in the technical field of systems for measuring aerodynamic properties of objects, particularly of scaled models emulating at least the empennage of an aircraft exposed to an air stream in a wind tunnel. More specifically, the invention pertains to the sector of systems used for compensating the effects of the support for the object on aerodynamic measurements corresponding to the empennage of the scaled model.

### PRIOR ART TO THE INVENTION

When designing the elements composing an aircraft, such as the fuselage, wings, stabilizers, etc. it is necessary to know the aerodynamic properties of such components. In view of the large size of aircraft, aerodynamic tests are made with scaled models that scaledly reproduce the whole or at least a part of the aircraft, the scaled models being subjected to tests in a wind tunnel. The support for scaled models of this kind is usually at least one main "sting" consisting of an arm extending within the tunnel in a direction contrary to the flow of the air stream and which is coupled to the rear portion of the scaled model by its front end. Such a device is shown in the US 2004/0253107. On the other hand, the support may also be provided with a secondary sting coupled to an area of the wing of the scaled model and which supports the wing.

The aerodynamic behavior of the empennage i.e. the tail of the aircraft is especially relevant. However, the sting is precisely coupled to the rear portion of the scaled model and the presence of the main sting thus influences measurements made and may therefore lead to erroneous data in the measurements. On the other hand, the presence of a secondary sting may also influence the measurements.

It was therefore desirable to have a system which would allow to obtain measurements which would compensate the effects of the stings on the aerodynamic measurements at the empennages of the scaled models.

### DESCRIPTION OF THE INVENTION

The present invention has as an object a system for compensating aerodynamic measurements in a wind tunnel, in which a scaled model emulating at least partially the shape of an aircraft is coupled by its rear portion in a per se known manner to a main sting, in which system there is additionally provided a twin sting extending in an axial direction that is substantially parallel to the axial disposition of the support sting, with a free end facing, in an aerodynamic contour continuity, an area at the rear portion of said wing, and which comprises sensor means provided at the free end of the twin sting for detecting relative shifting of the wing. In general, the twin sting has the same configuration as a conventional secondary sting.

The term "facing in an aerodynamic contour continuity" means, on the one hand, that the contour of the twin sting is a continuation of the aerodynamic contour determined by the area of the wing it faces and, on the other, that the gap existing between said area of the wing is sufficiently narrow that its presence does not have a significant influence on the air stream passing through the tunnel, i.e. that the dummy twin sting is configured such that its aerodynamic behavior is substantially the same as that of a conventional secondary sting.

The sensor means provided at the free end of the dummy twin sting may be measuring devices based on infrared beam or laser technology allowing detecting relative deviations between the area of the wing faced by the sensor means and said sensor means.

The data resulting from these measurements and its comparison with the aerodynamic data obtained in the presence of a secondary sting allow determination of the effects that the presence of the secondary sting has on the aerodynamic data and, therefore, allow to refine the aerodynamic data in such a manner that the effect on measurements of the presence of the secondary sting may be discriminated.

### BRIEF DESCRIPTION OF THE DRAWING

Hereafter, aspects and embodiments of the invention will be described with reference to drawings being an integral part of this specification. In these drawings,
figure 1 is a schematic perspective view of a testing arrangement according to an embodiment of the present invention in which the dummy twin sting takes part;
figure 2 is a schematic partial perspective view of the area where the free end of the dummy twin sting shown in figure 1 is positioned;
figure 3 is a cross-sectional view along line A-A' appearing in figure 2.

In these figures, there are reference numbers identifying the following documents:
- 1: scaled model
- 1a: empennage of the scaled model
- 1b: wing of the model
- 1c: measurement area at the wing of the scaled model
- 2: main sting
- 3: dummy twin sting
- 3a: free end of the dummy twin sting
- 4: gap
- 5: sensor means

### EMBODIMENTS OF THE INVENTION

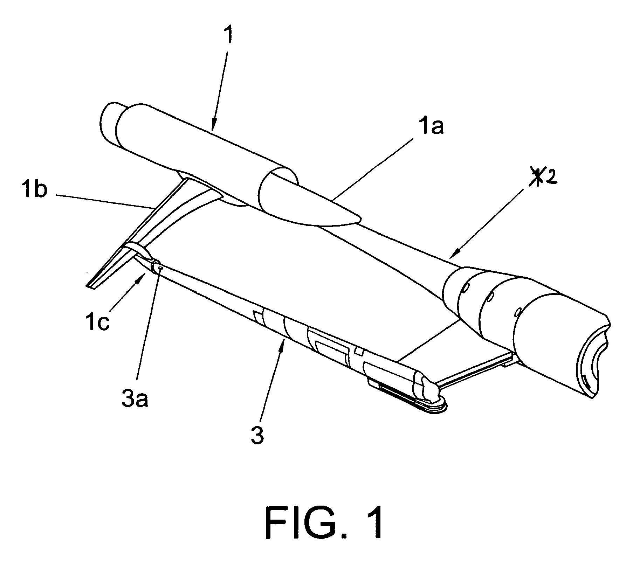

Figure 1 shows an embodiment of the system of the present invention in which the empennage 1a of the scaled model 1 is coupled in a per se conventional manner to a main sting 2. Coaxially with the main sting, there is arranged a dummy twin sting 3 the free end 3a of which ends facing a measurement area 1c at the wing 1b of the scaled model. The system is arranged in a per se conventional wind tunnel through which an air stream is made to flow.

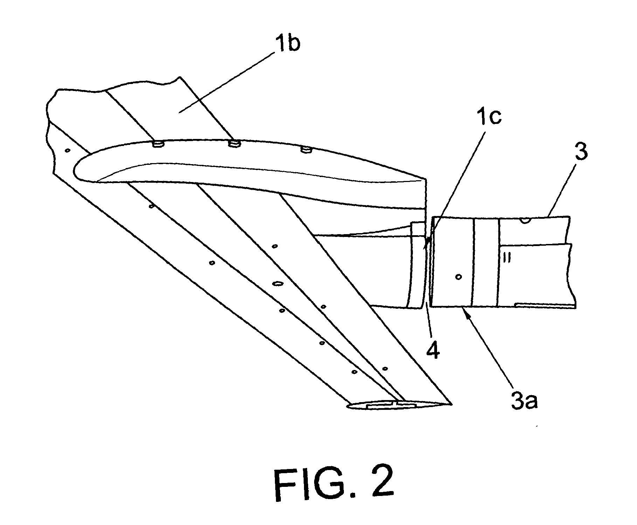

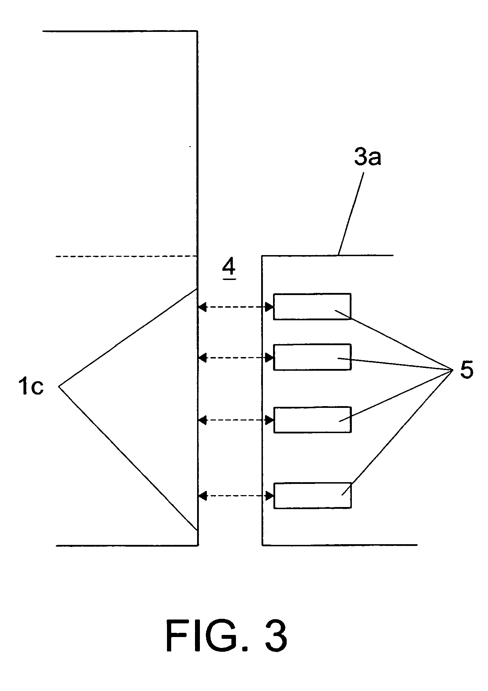

In accordance to what can be seen in figures 2 and 3, in the inside of the free end 3a of the dummy twin sting 3, there are per se conventional laser-technology based sensor means 5 that project laser beams through gap 4 on the measurement area 1c, such that deviations of the measurement area 1c corresponding to movements of the wing caused by the air stream passing through the tunnel are detected and measured by the sensor elements 5. The measurement area 1c emulates the outlet of a turbine positioned at wing 1b. The free end 3a of the dummy twin sting 3 is dimensioned and positioned in such a way that it confers aerodynamic continuity with respect to the measurement area 1c.

The data measured by the sensor means may be processed in a per se conventional manner so as to discriminate the influence of the presence of the dummy twin sting 3 on the aerodynamic behavior of the scaled model and thus that of a secondary sting used as support for the wing 1b.

## Claims

1. System for compensating aerodynamic measurements made in a wind tunnel with a testing arrangement comprising a main sting (2) connected to the rear portion of a scaled model emulating at least the empennage (1a) of a wing (1b) of an aircraft, **characterized in that** the system comprises
a dummy twin sting (3) extending in an axial direction being substantially parallel to the axial position of the main sting (2), with a free end (3a) facing a measurement area (1c) at the rear portion of said wing (1b) in aerodynamic contour configuration;
a gap (4) between said free end (3a) of the dummy twin sting (3) and said measurement area (1c); and
sensor means (5) at said free end (3a) of the dummy twin sting (3) whereby the sensor means are arranged for detecting shifting between said measurement area (1c) and said free end (3a) when the scaled model (1) is subjected to an air stream.

2. System according to claim 1, **characterized in that** the sensor means (5) comprise an infrared beam transceiver device.

3. System according to claim 1, **characterized in that** the sensor means (5) comprise a laser beam transceiver device.

## Patentansprüche

1. System zum Kompensieren aerodynamischer Messungen, die in einem Windtunnel mit einer Testvorrichtung durchgeführt werden, mit einer Hauptspitze (2), die mit einem Rückteil eines skalierten Modells verbunden ist, das zumindest das Leitwerk (1a) eines Flügels (1b) eines Flugzeugs nachbildet, **dadurch gekennzeichnet, dass** das System enthält:
eine Attrappen-Doppelspitze (3), die sich in axialer Richtung und im Wesentlichen parallel zur axialen Position der Hauptspitze (2) erstreckt, wobei ein freies Ende (3a) dem Messbereich (1c) am hinteren Teil des Flügels (1b) in einer aerodynamischen Konturausbildung zugewandt ist;
einen Spalt (4) zwischen dem freien Ende (3a) der Attrappen-Doppelspitze (3) und dem Messbereich (1c); und
Sensorenmittel (5) am freien Ende (3a) der Attrappen-Doppelspitze (3), die eingerichtet sind, um ein Verschieben zwischen dem Messbereich (1c) und den freien Enden (3a) zu detektieren, wenn das skalierte Modell (1) einem Luftstrom ausgesetzt ist.

2. System nach Anspruch 1, **dadurch gekennzeichnet, dass** die Sensorenmittel (5) einen Infrarotstrahl-Sendeempfänger aufweisen.

3. System nach Anspruch 1, **dadurch gekennzeichnet, dass** die Sensorenmittel (5) einen Laserstrahl-Sendeempfänger aufweisen.

## Revendications

1. Système de compensation de mesures aérodynamiques effectuées dans une soufflerie avec un équipement de test, comprenant un dard principal (2) qui est connecté à la partie arrière d'un modèle à l'échelle réduite imitant au moins l'empennage (1a) d'une aile (1b) d'un avion, **caractérisé en ce que** le système comprend:
un double dard fictif (3) qui s'étend dans une direction axiale qui est sensiblement parallèle à la position axiale du dard principal (2), avec une extrémité libre (3a) qui fait face à une région de mesure (1c) à la partie arrière de ladite aile (1b) dans une configuration de contour aérodynamique;
un espace (4) entre ladite extrémité libre (3a) du double dard fictif (3) et ladite région de mesure (1c); et
un moyen de capteur (5) à l'extrémité libre (3a) du double dard fictif (3), dans lequel le moyen de capteur est agencé de manière à détecter tout décalage entre ladite région de mesure (1c) et ladite extrémité libre (3a) lorsque le modèle à l'échelle réduite (1) est soumis à un courant d'air.

2. Système selon la revendication 1, **caractérisé en ce que** le moyen de capteur (5) comprend un dispositif émetteur - récepteur de faisceau infrarouge.

3. Système selon la revendication 1, **caractérisé en ce que** le moyen de capteur (5) comprend un dispositif émetteur - récepteur de faisceau laser.
